# EUROPEAN PATENT SPECIFICATION

(11) **EP 1 504 939 B1**
(45) Date of publication and mention of the grant of the patent: **12.03.2008**
(21) Application number: 03380188.7
(22) Date of filing: 04.08.2003
(51) Int. Cl.: B60J 5/04

(54) **Multifunction support means for vehicle doors**
Multifunktionelles Türmodul für Fahrzeugtüren
Module multifonction de porte pour portières de véhicule automobile

(43) Date of publication of application: 09.02.2005
(73) Proprietor: GRUPO ANTOLIN-INGENIERIA, S.A., 09007 Burgos (ES)
(72) Inventor: Antolin Fernandez, Adelaida, 09006 Burgos (ES); Jorro de Inza, Alejandro, 09002 Burgos (ES)
(74) Representative: Esteban Perez-Serrano, Maria Isabel

(56) References cited:
- CA-C- 1 332 620
- PATENT ABSTRACTS OF JAPAN vol. 1995, no. 08, 29 September 1995 (1995-09-29) & JP 07 112614 A (NISSAN MOTOR CO LTD), 2 May 1995 (1995-05-02)
- PATENT ABSTRACTS OF JAPAN vol. 1998, no. 14, 31 December 1998 (1998-12-31) & JP 10 244880 A (KASAI KOGYO CO LTD), 14 September 1998 (1998-09-14)

## Description

### OBJECT OF THE INVENTION

The present invention refers to multifunction support means for vehicle doors in which a large number of devices are integrated into different functions that are normally arranged separately in the door panel.

The devices and components that are installable in these support means include: the door lock mechanism, the opening handle, the speaker sound output, the air outlet, the housings for the fastenings of the part to the resisting structure of the door as well as different optional accesses.

Integration on a single carrier of this large number of devices and elements that are usually spaced apart and arranged separately gives rise to an enhancement of the visual appearance of the door panel through achieving a clean design that conceals the bulk of the devices, besides a considerable reduction in the costs of manufacture and installation.

### BACKGROUND OF THE INVENTION

Vehicle doors are currently mounted in such a way that the interior panel of the door incorporates a number of different actuating elements, speakers or supports that are installed separately and spread over the whole visible area of the inside of the door panel.

Each one of the items to be built in has its own structural requirements, as is the case of the speaker supports, which have to be capable of absorbing the stress due to the inertial effects of the magnets when the door is closed, as well as power supply, air intake and flow, and other special requirements relating to space.

Such requirements call for special designs for every item, which in most cases prevent a device from performing more than one function.

Similarly, the technical specialisation of every one of the items built into this door support determines design solutions that tend to be independent of one another as they focus their activity on every one of the elements separately, thus preventing the overall development that will give rise to mutual integration.

For instance, we may consider Japanese patent with publication number JP9268810, in which an interior actuator-operated door lock opening device is described, which is installed on its own support with reading of the opening signal by means of wires linking the handle and the safety catch.

Even greater are the space limitations imposed by the ventilation circuits on account of the passing of ducts of appropriate section, with a circulation without excessive pressure drops, silent and suitably coupled to the intake manifolds.

European Patent EP0752336 describes a window opening means for motor vehicles in which the door has a built-in aeration grille close to the door hinge pin and which is arranged at the top close to the window glass outlet slot.

This solution continues to refer to a spatial arrangement separate from the other items present in the door without there being any mutual interaction, either functionally or structurally.

German Patent DE2510220 is an example of a solution for ventilation distribution on the inside of a door. The forced draught, based on the fitting of a fan in the actual door, is distributed along large chambers, issuing from grilles and from the exterior rear view mirror support bracket. A visual relationship may be observed between the width of the door and the fairly substantial height needed to permit the passage of these flow ducts and distributors.

We may single out Patent US6254175 as a solution that offers a higher degree of integration of the ventilation ducts with the door grab-handle.

This Patent describes ventilation means built into the door which prevent excessive exposure to the flow of air through the elements arresting this flow.

The arresting means consist of mechanical actuators that operate on variable flow control shut-offs and which are capable of adapting to a special configuration of the access duct.

Japanese Patent JP 07-112614 shows the assembly of a ventilation duct.

In the present invention the support means that will be described are capable of including all the necessary elements for opening and closing the door, ventilation, audio and a variety of accessories that are built into a door without being visible from the outside while at the same time preventing them from interfering with others.

### DESCRIPTION OF THE INVENTION

The present invention consists of a multifunction support for car doors which is specially designed to house different operating devices and services mounted in a door, accessible from the inside, in such a way that they are not visible, are more convenient to use and permit an integrated installation that redounds to a substantial reduction in costs.

The current tendency in new designs is that of dispensing with the bulk of the visible elements giving rise to a door with a simple appearance free of devices that overburden its external appearance.

The multifunction support means of the invention and, in particular, the part that forms the main support achieve this objective by assembling on it all the elements to be installed in the door so that attachment to the door is a single operation, reducing the labour required drastically.

The multifunction support means are based on the presence of a main support part in conjunction with the door interior panel. The main support part forms a main cavity and various ducts and spaces that may be half-open, so that both the main cavity and the ducts and spaces are closed by means of the interior panel.

The main support part is built into the inside of the door in such a way that, once installed, it is only accessible from a large mouth that provides access to the aforesaid main cavity and, therefore, both to all the functions that it houses and to the services offered by the devices installed.

With regard to the devices or elements accessible, we may mention:
- The door opening actuator
- The door opening and closing handle
- The window operating mechanism
- An optional opening for quick access to a small interior pocket.
and with regard to the services offered by the devices installed we may also mention:
- The ventilation function, where in particular the aeration system air outlet is located,
- The audio function consisting mainly of a speaker attached to the back of the main support part,
- The lighting function that gives rise to an ambient light output.

The presence of the devices or elements stated and the prevention of the afore-mentioned services are due to a special design of the panel covered by the invention that permits integration of the ventilation ducts, inclusion of the different means of attachment for the integration of devices and the use of a sturdy arrangement capable of meeting the mechanical demands imposed by the door opening and closing handle, plus the inertias of the masses included like that due to the speaker.

Regarding the structure of this main support part, it consists of a body composed of a complex injected surface in which we may make out a large main area with a perforated area formed by a set of holes that define a grille. Under this area, a wall extends that covers the front area in such a way that a space is established which will correspond to the cavity accessible to the user by way of the main mouth.

This body is completed with an air reception cavity which is extended at the top by a half-open duct.. It is half-open because, being installed on the door, the door panel closes the open side, in this way forming all the air distribution ducts.

In this way, from the air reception cavity (which comes from a duct communicated with the dash when the door is closed) run two conduits, the aforesaid upper one for demisting the window and the one that ducts the air from the upper conduit by means of one or more openings towards the main cavity, formed by the surface of the grille, so that it ducts the main flow to the inside of the compartment, besides other ducts that direct the air to other parts of the vehicle.

The grille defined on the main area of the main support part is what separates the cavity from the back part where the speaker is installed with direct access to the compartment.

Between the grille and the air reception cavity lies an area which permits the installation of a light source to which there is no direct visual access. The indirect access light establishes an environment in keeping with the look that is sought with the integration of elements and actuators and their visual concealment.

It is the lower wall that optionally permits the inclusion of an access opening to a lower compartment taking the form of a pocket.

The structure of this main support part is completed with a bearing part that may be an integral element of the main support part or be a separate part that is installed in the main support part and is made up of a handle, which, if a separate part, includes the attaching turrets that constitute and form the housings for fastening it to the bearing structure of the door.

The lock operating mechanism is housed in the handle part.

There is a possibility of bi-injections in other materials that may provide different functions in the main support part (elastomers for the lock actuator and polycarbonates for light distribution, for instance).

The inclusion of the lock mechanism in the handle succeeds in establishing the opening and closing functions geometrically close.

From the user's point of view, he notices an enhancement of the auditory, visual and tactile sensation as a result of both the light and sound generating and lock operating elements being concealed and the use of such different materials as elastomers for improving the feel, and due to the way air is ducted into the passenger compartment.

The installation of all the functions is done in the main multifunction support thereby saving the each one having to be fitted separately, special tools and the embellishers, with the considerable saving that this represents.

Similarly, superinjection in different colours saves the need for other finishes to be applied.

### DESCRIPTION OF THE DRAWINGS

This descriptive report is completed with a set of drawings illustrating the preferred embodiment of the invention but not restricting its scope.

Figure 1 shows a door according to the current state of the art, where there is no integration of the different elements fitted on the trim.

Figure 2 is a perspective view of the door when open, showing the design resulting from using the multifunction support means covered by the invention.

Figure 3 is a perspective view of the main support part in an embodiment of the invention in which the internal cavity may be observed, along with the parts composing it.

Figure 4 is a perspective view of the main support part in the same embodiment, showing the rear view with different close-ups of the anchorages.

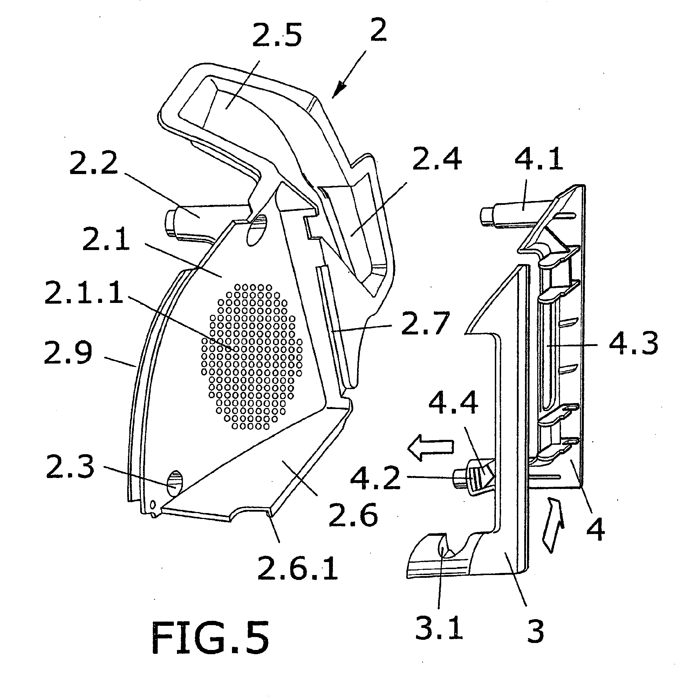

Figure 5 is a perspective view similar to Figure 3, in which the opening handle bearing part and the embellisher are included.

Figure 6 is a perspective view similar to Figure 2, in which the door is shown in thicker lines and the main support part, which is concealed, in finer lines.

### DETAILED DISCLOSURE OF ONE MODE OF EMBODIMENT

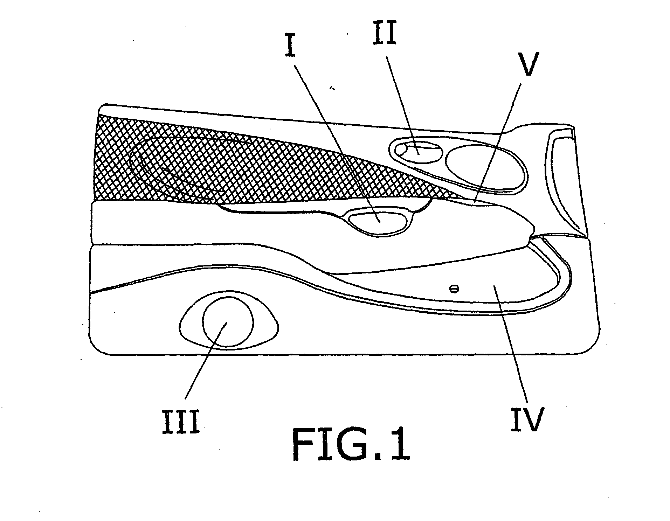

Figure 1 represents a door that acts as an example of the state of the art at the time of the application, in which the different components arranged in the area seen are shown on the interior panel of the door.

Since this figure is intended to show the state of the art, the numerals that are used as references are Roman, while Arabic numerals are reserved for describing the invention.

In this first figure we observe the handle (I) over the armrest, which is extended towards a front area where such actuators as the window operator (IV) are installed.

Above this we see the door locking actuator (II) with the safety catch, fitted separately with its own embellisher.

Below these items the lower area is distinguished by a cavity where the speaker (III) is installed and the pocket (IV) for storing, for instance, a map or the vehicle documentation.

With this layout there may be no air outlets, which are fitted solely in the dash.

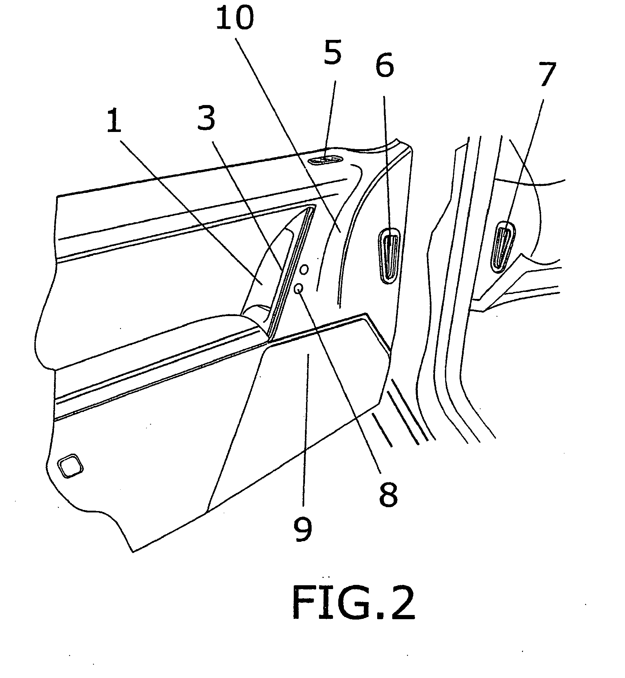

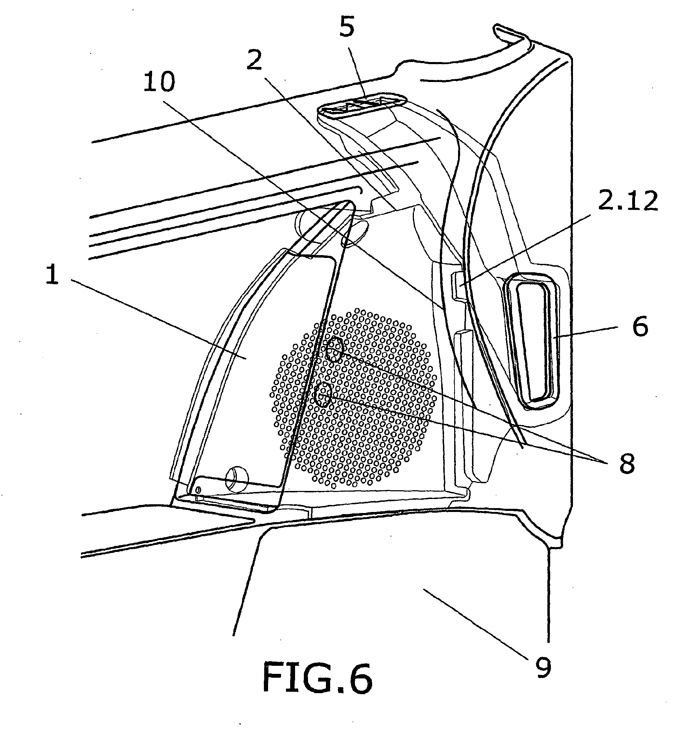

Figures 2 and 6 are the ones that show the door resulting from application of the present invention, where all the foregoing items disappear, so that we may only discern a large mouth (1) that gives rise to the interior of the multifunction main support part (2) covered by the invention, with all its devices and services.

The mouth (1) is prolonged at the rear in the armrest, so that the hand slips naturally into this mouth (1) so as to use its end part as a handle on which the lock actuator is concealed from sight.

Matching up vertically with the mouth cavity (1) and arranged below it is the pocket (9), which may also be accessed from the mouth (1). The presence of a perforation in the cavity means that it is not necessary to open the pocket (9) in order to drop keys, for example.

The door being open, this same figure 2 shows two matching openings when the door is closed for the flow of air from the dash to the internal ducts in the door.

Thus, on the dash the air outlet (7) is shown with its perimeter edge matching the perimeter edge of the door air inlet (6).

The air entering via the door inlet (6) will be distributed partly via the upper outlet (5) for demisting the door window and the rest via an opening (2.12) which is located inside the main mouth (1) but out of the user's sight.

In this embodiment we also observe two outer buttons (8) which could adopt electric window locking and central door locking functions, respectively.

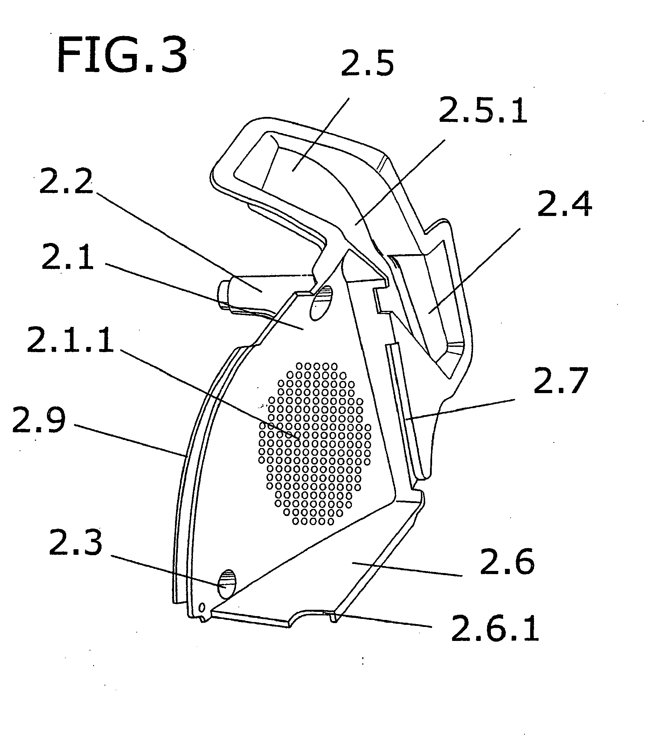

The inside of the mouth (1) is made up of the multifunction main support part (2) covered by the invention and whose main part is shown in figure 3.

This main support part (2) consists of a curviconcave surface (2.1) on which a grille is defined (2.1.1).

The grille (2.1.1) pertains to the speaker which is installed at the rear, so that the sound is transmitted directly to the mouth (1), where it issues.

Below this curviconcave surface (2.1) there is a lower extension (2.6) in the form of a horizontal wall. The door interior panel (10) which is covered on the right by the main support part (2), according to the perspective view of figures 2 and 6, closes the space defining the cavity access from the main mouth (1). It is this horizontal wall (2.6) which may be optionally perforated for direct access to the lower pocket (9).

In the part closest to the door hinge pin the main support part (2) is extended in a structure formed by a reception cavity (2.4) for the air from the intake (6) connected in turn to the air supply duct inlet (7).

This cavity (2.4) communicates in turn with an upper duct (2.5) arranged obliquely which has the function of directing part of the air towards the air outlet (5) for demisting the window and it further communicates with an opening (2.12) situated in the inner space accessible by way of the mouth (1), which directs the air towards the user.

The same as all the cavities, this cavity (2.4) is closed by the interior door panel (10), which establishes the sealing surface on the door interior side.

In addition, in this upper duct (2.5) there is an area (2.5.1) in which there is a possible option of fitting an air cleaning system.

Between the curviconcave surface (2.1) and the air reception cavity (2.4) there is an intermediate step (2.7) which is used for housing the ambient light attached by clip. This light source may be provided with an element for distributing the light made by means of a bi-injection process in the actual main support part (2).

On the curviconcave surface (2.1) there are also two turrets (2.2, 2.3), which are simply frustoconical extensions that reach the door bearing structure.

These turrets (2.2, 2.3) are hollow and in turn house a second handle part (4) which has another two turrets (4.1, 4.2), one at either end (these being the areas most subject to stress), which are coupled to the other two main support part (2) turrets.

The handle part (4) turrets (4.1, 4.2) are the ones that link the handle (4) to the door resisting structure, passing through the hollow turrets (2.2, 2.3) of the multifunction main support part (2). These turrets form the housings of the fastenings of both parts to the door bearing structure, so that when the handle turrets (4.1, 4.2) are coupled to those of the main support part (2), the screws pass through and both parts are secured to the door bearing structure.

Figure (5) shows the main support part (2), the second part (4) that forms the handle, as well as the embellisher (3) clipped to the handle part (4) which covers the part of the handle visible from the mouth (1). In its main body the handle (4) has structural ribs designed to facilitate the passing and guiding of the electrical wiring.

Together with the second part, both the embellisher (3) and the second part (4) of the handle have next to the lower turret (4.2) a slotting (3.1, 4.4), which makes it possible to fit a switch, for instance, for operating the electric window. This switch would indeed be visually accessible from the outside. In order to be able to fit this switch as well as to run the supply wiring, the horizontal extension wall (2.6) of the curviconcave surface (2.1) is slotted (2.6.1) to provide the access.

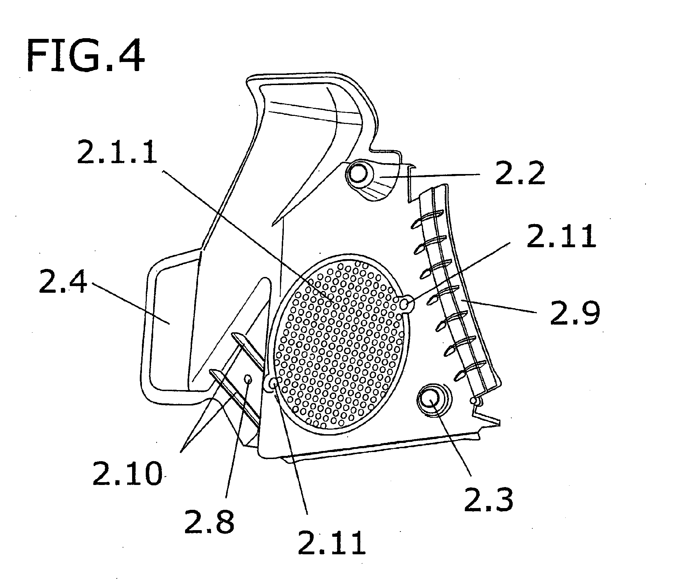

It is in figure 4, showing a rear view of the main support part (2) in which we may observe the grille (2.1.1) where the speaker is fitted at the back (not shown). The speaker is screwed to thickness pieces (2.11) with blind perforation without any need for additional fastenings.

The back part of the air reception cavity (2.4) is also shown with the upper conduit (2.5) separated by bracing ribs (2.10) from the main curviconcave area (2.1) , the place where at least one locating point (2.8) is situated for fitting the multifunction support in its proper position. Amongst other stresses, this area is subject to inertia forces acting on the speaker frame when the door is closed.

Similarly, part (4), which also acts as a handle, has structural bracing ribs, which in addition include means for running and guiding the wiring and a housing (4.3) for the door lock opening actuator.

The structure of the main support part (2) is completed by the inclusion of an overlap (2.9) reinforced with rear ribs located at the edge bordering on the mouth (1). This overlap covers the separation slot on the inside between the main support part (2) and the door interior panel and it is used for fastening the multifunction main support part (2) to the door interior panel and for assuring the proper positioning of both parts and taking up their tolerances.

The essential nature of this invention is not altered by variations in materials, shape, size and layout of the component parts, described in a non-restrictive way, but in sufficient detail for their reproduction by an expert.

## Claims

1. Multifunction support means for vehicle doors, of the type of support means for the installation of door components usually accessible from the door interior panel, **characterized by** being made up of an internally fitted main support part (2) forming a main cavity covered by the interior panel (10) in such a way that together both parts form an internal space accessible from a single mouth (1) defined by means of the main support part itself (2) and the interior panel (10), where the main support part (2) includes the elements (4,3) relating to the door opening and closing function, the elements (2.1.1.1, 2.11) relating to the audio function, and the elements (2.4, 2.5) relating to the ventilation function, elements (2.2, 2.3) relating to the door handle (4), in addition leaving free space for the fitting of other optional additional devices, all of the aforesaid elements being close to one another, concealed from the user's view and accessible from the single mouth (1).

2. Multifunction support means for vehicle doors according to claim 1, **characterised in that** the actuator or actuators for the door opening and closing function (4.3) are built into the door handle (4).

3. Multifunction support means for vehicle doors according to claim 2, **characterised in that** the actuator or actuators for the door opening and closing are of an elastomer type material.

4. Multifunction support means for vehicle doors according to claim 1, **characterised in that** the door handle (4) and the main support part (2) form a single resisting body.

5. Multifunction support means for vehicle doors according to claim 4, **characterised in that** the door handle (4) is made up of a single part integral with the main support part (2).

6. Multifunction support means for vehicle doors according to claim 4, **characterised in that** the door handle (4) has structural ribs on its main body designed to facilitate the running and guiding of electrical wiring.

7. Multifunction support means for vehicle doors according to claim 4, **characterised in that** the door handle (4) is covered with an embellisher (3) fastened to it.

8. Multifunction support means for vehicle doors according to claim 1, **characterised in that** the main support part (2) includes components for the lighting function.

9. Multifunction support means for vehicle doors according to claim 8, **characterised in that** the lighting function consists of a light source, which is concealed (2.7) from the user's view, in such a way that the light issues from the mouth (1).

10. Multifunction support means for vehicle doors according to claim 8, **characterised in that** the light source consists of an element for the distribution of the light produced by means of a process of bi-injection in the actual main support part (2).

11. Multifunction support means for vehicle doors according to claim 1, **characterised in that** the elements that include the ventilation function are composed of an air duct that channels the flow from an inlet (6), which communicates with an air supply outlet (7), situated on the side of the dash when the door is in the closed position, via the inside of the main support part (2) as far as at least one outlet opening (2.12) located in the main support part (2).

12. Multifunction support, means for vehicle doors according to claim 11, **characterised in that** at least one of the air outlets is located in an area adjacent to the door window to assure its demisting.

13. Multifunction support means for vehicle doors according to claim 11, **characterised in that** at least one of the outlets (2.12) is situated inside the mouth (1) of the main support part (2), concealed from the user's view.

14. Multifunction support means for vehicle doors according to claim 11, **characterised in that** the aforesaid air duct is defined by the main support part (2) and the door interior panel (10).

15. Multifunction support means for vehicle doors according to claim 1, **characterised in that** the main support part (2) contains the housings of the fastenings for anchoring to the door resisting structure.

16. Multifunction support means for vehicle doors according to claim 15, **characterised in that** the location of the housings for fastening the main support part (2) is determined by the situation of the handle (4) maximum stress points.

17. Multifunction support means for vehicle doors according to claim 16, **characterised in that** the location of the housings for the fastening of the main support part (2) coincides with the location of the handle (4) attachment points on the door, so that both components may be fixed to the door resisting structure at the same time.

18. Multifunction support means for vehicle doors according to claim 1, **characterised in that** the one of the elements that includes the audio function is made up of a perforated area in the main support part (2) defining a grille (2.1.1) for the passage of the sound from a speaker arranged at the back of said main support part (2).

19. Multifunction support means for vehicle doors according to claim 1, **characterised in that** the main support part (2) has at least one locator (2.8) to assure its proper positioning during installation.

20. Multifunction support means for vehicle doors according to claim 1, **characterised in that** the main support part (2) includes an air cleaning system (2.5.1).

21. Multifunction support means for vehicle doors according to claim 1, **characterised in that** in the lower wall (2.6) the main support part (2) has an access perforation to the door pocket (9).

22. Multifunction support means for vehicle doors according to claim 1, **characterised in that** the main support part (2) includes a housing for the electric window actuator.

23. Multifunction support means for vehicle doors according to claim 22, **characterised in that** the electric window actuator is housed in slotting (4.4) in the handle (4) and slotting (2.6.1) in the lower wall (2.6) of the main support part (2), said slotting (2.6.1) being the means for running in the wiring.

24. Multifunction support means for vehicle doors according to claim 1, **characterised in that** the main support part (2) includes housings for the actuators for the control of the different electric mechanisms provided on the vehicle.

## Patentansprüche

1. Multifunktionelles Türmodul für Fahrzeugtüren, von der Art von Türmodulen für die Installation von Türkomponenten, die normalerweise von dem Türinnenpaneel aus zugänglich sind, **dadurch gekennzeichnet, dass** diese aus einem intern angepassten Hauptträgerteil (2) bestehen, das einen Haupthohlraum bildet, der von dem Innenpaneel (10) derart abgedeckt ist, dass beide Teile zusammen einen internen Raum bilden, der von einer einzigen Öffnung (1) her zugänglich ist, die mittels des Hauptträgerteils (2) selbst und des Innenpaneels (10) definiert wird, wobei das Hauptträgerteil (2) die Elemente (4.3) bezüglich der Türöffnungs- und Türschließfunktion, die Elemente (2.1.1, 2.11) bezüglich der Audiofunktion, und die Elemente (2.4, 2.5) bezüglich der Lüftungsfunktion, die Elemente (2.2, 2.3) bezüglich des Türgriffs (4) enthält, wobei zusätzlich freier Raum für die Befestigung anderer optionaler zusätzlicher Vorrichtungen belassen wird, wobei alle die oben erwähnten Elemente sich nahe zueinander, vor dem Blick des Benutzers verdeckt und von der einzigen Öffnung aus zugänglich befinden.

2. Multifunktionelles Türmodul für Fahrzeugtüren nach Anspruch 1, **dadurch gekennzeichnet, dass** das Bedienteil oder die Bedienteile für die Türöffnungs- und Türschließfunktion (4.3) in den Türgriff (4) eingebaut sind.

3. Multifunktionelles Türmodul für Fahrzeugtüren nach Anspruch 2, **dadurch gekennzeichnet, dass** das Bedienteil oder die Bedienteile für die Öffnung und Schließung der Tür aus einem Material von der Art eines Elastomers bestehen.

4. Multifunktionelles Türmodul für Fahrzeugtüren nach Anspruch 2, **dadurch gekennzeichnet, dass** der Türgriff (4) und das Hauptträgerteil (2) ein einziges widerstandsfähiges Gehäuse bilden.

5. Multifunktionelles Türmodul für Fahrzeugtüren nach Anspruch 4, **dadurch gekennzeichnet, dass** der Türgriff (4) aus einem einzigen mit dem Hauptträgerteil (2) integralem Teil gebildet ist.

6. Multifunktionelles Türmodul für Fahrzeugtüren nach Anspruch 4, **dadurch gekennzeichnet, dass** der Türgriff (4) strukturelle Rippen auf seinem Hauptgehäuse besitzt, die dazu entworfen sind, die Verlegung und Führung der elektrischen Verkabelung zu ermöglichen.

7. Multifunktionelles Türmodul für Fahrzeugtüren nach Anspruch 4, **dadurch gekennzeichnet, dass** der Türgriff (4) mit einer an diesem befestigten Verzierung (3) abgedeckt ist.

8. Multifunktionelles Türmodul für Fahrzeugtüren nach Anspruch 1, **dadurch gekennzeichnet, dass** das Hauptträgerteil (2) Komponenten für die Beleuchtungsfunktion einschließt.

9. Multifunktionelles Türmodul für Fahrzeugtüren nach Anspruch 8, **dadurch gekennzeichnet, dass** die Beleuchtungsfunktion aus einer Lichtquelle besteht, die vor dem Blick des Benutzers auf solche Weise verdeckt (2.7) ist, dass das Licht aus der Öffnung (1) scheint.

10. Multifunktionelles Türmodul für Fahrzeugtüren nach Anspruch 8, **dadurch gekennzeichnet, dass** die Lichtquelle aus einem Element zur Verteilung des Lichts besteht, das mittels eines Prozesses einer Bi-Einspritzung in das eigentliche Hauptträgerteil (2) hergestellt wird.

11. Multifunktionelles Türmodul für Fahrzeugtüren nach Anspruch 1, **dadurch gekennzeichnet, dass** die Elemente, die die Lüftungsfunktion einschließen, aus einem Lüftungskanal bestehen, der den Durchfluss von einem Einlass (6) leitet, der mit einem Luftversorgungsauslass (7) kommuniziert, der sich auf der Seite der Armaturenbretts befindet, wenn sich die Tür in der geschlossenen Position befindet, über das Innere des Hauptträgerteils (2) bis zu mindestens einer in dem Hauptträgerteil (2) befindlichen Auslassöffnung (2.12).

12. Multifunktionelles Türmodul für Fahrzeugtüren nach Anspruch 11, **dadurch gekennzeichnet, dass** sich mindestens einer der Luftauslässe in einem Bereich angrenzend an die Fensterscheibe befindet, um deren Freimachung zu gewährleisten.

13. Multifunktionelles Türmodul für Fahrzeugtüren nach Anspruch 11, **dadurch gekennzeichnet, dass** sich mindestens einer der Auslässe (2.12) innerhalb der Öffnung (1) des Hauptträgerteils (2) vor den Blicken des Benutzers verborgen befindet.

14. Multifunktionelles Türmodul für Fahrzeugtüren nach Anspruch 11, **dadurch gekennzeichnet, dass** der oben erwähnte Lüftungskanal von dem Hauptträgerteil (2) und dem Türinnenpaneel (10) definiert wird.

15. Multifunktionelles Türmodul für Fahrzeugtüren nach Anspruch 1, **dadurch gekennzeichnet, dass** das Hauptträgerteil (2) das Gehäuse der Befestigungen zur Verankerung der widerstandsfähigen Türstruktur enthält.

16. Multifunktionelles Türmodul für Fahrzeugtüren nach Anspruch 15, **dadurch gekennzeichnet, dass** die Stelle der Gehäuse zur Befestigung des Hauptträgerteils (2) durch die Position der maximalen Belastungspunkte des Griffs (4) definiert wird.

17. Multifunktionelles Türmodul für Fahrzeugtüren nach Anspruch 16, **dadurch gekennzeichnet, dass** die Stelle der Gehäuse zur Befestigung des Hauptträgerteils (2) mit der Stelle des Befestigungspunktes des Griffs (4) an der Tür übereinstimmt, so dass beide Komponenten zur selben Zeit an der widerstandsfähigen Türstruktur befestigt werden können.

18. Multifunktionelles Türmodul für Fahrzeugtüren nach Anspruch 1, **dadurch gekennzeichnet, dass** das eine der Elemente, das die Audiofunktion enthält, aus einem perforiertem Bereich in dem Hauptträgerteil (2) besteht, der ein Gitter (2.1.1) für den Durchlass des Tons von einem Lautsprecher definiert, der auf der Rückseite des besagten Hauptträgerteils (2) angeordnet ist.

19. Multifunktionelles Türmodul für Fahrzeugtüren nach Anspruch 1, **dadurch gekennzeichnet, dass** das Hauptträgerteil (2) mindestens einen Zentrierring (2.8) besitzt, um dessen korrekte Positionierung während der Installation zu gewährleisten.

20. Multifunktionelles Türmodul für Fahrzeugtüren nach Anspruch 1, **dadurch gekennzeichnet, dass** das Hauptträgerteil (2) ein Luftreinigungssystem (2.5.1) einschließt.

21. Multifunktionelles Türmodul für Fahrzeugtüren nach Anspruch 1, **dadurch gekennzeichnet, dass** das Hauptträgerteil (2) in der unteren Wand (2.6) eine Zugangsbohrung zum Türablagefach (9) besitzt.

22. Multifunktionelles Türmodul für Fahrzeugtüren nach Anspruch 1, **dadurch gekennzeichnet, dass** das Hauptträgerteil (2) ein Gehäuse für den elektrischen Fensterheber einschließt.

23. Multifunktionelles Türmodul für Fahrzeugtüren nach Anspruch 22, **dadurch gekennzeichnet, dass** der elektrische Fensterheber in dem Schlitz (4.4) in dem Griff (4) und dem Schlitz (2.6.1) in der unteren Wand (2.6) des Hauptträgerteils (2) gelagert ist, wobei es sich bei dem besagten Schlitz (2.6.1) um das Mittel zur Verlegung der Verkabelung handelt.

24. Multifunktionelles Türmodul für Fahrzeugtüren nach Anspruch 1, **dadurch gekennzeichnet, dass** das Hauptträgerteil (2) Gehäuse für die Antriebe der Steuerungen der verschiedenen elektrischen Mechanismen einschließt, mit denen das Fahrzeug ausgestattet ist.

## Revendications

1. Organe de support multifonction pour portières de véhicule, du type des organes de support pour l'installation de pièces de portière auxquelles on a généralement accès à partir du panneau intérieur de la portière, **caractérisé par le fait qu'**il est composé d'une partie principale (2) ajustée à l'intérieur recouverte par le panneau intérieur (10) de telle façon que les deux parties forment ensemble un espace interne accessible à partir d'un orifice unique (1) défini au moyen de la partie principale elle-même (2) et du panneau intérieur (10), où la partie de support principale (2) comprend les éléments (4.3) en rapport avec la fonction d'ouverture et de fermeture de la portière, les éléments (2.1.1, 2.11) en rapport avec la fonction audio, et les éléments (2.4, 2.5) en rapport avec la fonction d'aération, les éléments (2.2, 2.3) en rapport avec la poignée de portière (4), laissant en outre un espace libre pour l'ajustement d'autres dispositifs supplémentaires optionnels, tous les éléments mentionnés ci-dessus étant proches les uns des autres, dissimulés à la vue de l'utilisateur et accessibles depuis l'unique orifice (1).

2. Organe de support multifonction pour portières de véhicule selon la revendication 1, **caractérisé en ce que** l'actionneur ou les actionneurs pour la fonction d'ouverture et de fermeture de la portière (4.3) sont construits dans la poignée de portière (4).

3. Organe de support multifonction pour portières de véhicule selon la revendication 2, **caractérisé en ce que** l'actionneur ou les actionneurs pour l'ouverture et la fermeture de la portière sont réalisés dans un matériau de type élastomère.

4. Organe de support multifonction pour portières de véhicule selon la revendication 1, **caractérisé en ce que** la poignée de portière (4) et la partie de support principale (2) forment un unique corps résistant.

5. Organe de support multifonction pour portières de véhicule selon la revendication 4, **caractérisé en ce que** la poignée de portière (4) est composée d'une partie unique solidaire de la partie de support principale (2).

6. Organe de support multifonction pour portières de véhicule selon la revendication 4, **caractérisé en ce que** la poignée de portière (4) possède des nervures structurales sur son corps principal conçues pour faciliter le passage et le guidage du câblage électrique.

7. Organe de support multifonction pour portières de véhicule selon la revendication 4, **caractérisé en ce que** la poignée de portière (4) est recouverte d'un enjoliveur (3) fixé sur elle.

8. Organe de support multifonction pour portières de véhicule selon la revendication 1, **caractérisé en ce que** la partie de support principale (2) comprend des pièces pour la fonction d'éclairage.

9. Organe de support multifonction pour portières de véhicule selon la revendication 8, **caractérisé en ce que** la fonction d'éclairage consiste en une source de lumière, qui est dissimulée (2.7) à la vue de l'utilisateur, de telle manière que la lumière sort de l'orifice (1).

10. Organe de support multifonction pour portières de véhicule selon la revendication 8, **caractérisé en ce que** la source de lumière consiste en un élément pour la distribution de la lumière produite au moyen d'un procédé de bi-injection dans la partie de support principale (2) effective.

11. Organe de support multifonction pour portières de véhicule selon la revendication 1, **caractérisé en ce que** les éléments qui comprennent la fonction d'aération sont composés d'un conduit d'air qui achemine le flux depuis une arrivée (6), qui communique avec une sortie d'alimentation en air (7), située sur le côté du tableau de bord lorsque la portière est en position fermée, via l'intérieur de la partie de support principale (2) jusqu'à une ouverture de sortie (2.12) au moins située dans la partie de support principale (2).

12. Organe de support multifonction pour portières de véhicule selon la revendication 11, **caractérisé en ce que** l'une des sorties d'air au moins est située dans une zone adjacente à la fenêtre de la portière pour assurer son désembuage.

13. Organe de support multifonction pour portières de véhicule selon la revendication 11, **caractérisé en ce que** l'une des sorties (2.12) au moins est située à l'intérieur de l'orifice (1) de la partie de support principale (2), dissimulé à la vue de l'utilisateur.

14. Organe de support multifonction pour portières de véhicule selon la revendication 11, **caractérisé en ce que** le conduit d'air mentionné ci-dessus est défini par la partie de support principale (2) et le panneau intérieur de la portière (10).

15. Organe de support multifonction pour portières de véhicule selon la revendication 1, **caractérisé en ce que** la partie de support principale (2) contient les boîtiers des fixations pour arrimer à la structure résistante de la portière.

16. Organe de support multifonction pour portières de véhicule selon la revendication 15, **caractérisé en ce que** l'emplacement des boîtiers pour fixer la partie de support principale (2) est déterminé par la situation des points de contrainte maximale de la poignée (4).

17. Organe de support multifonction pour portières de véhicule selon la revendication 16, **caractérisé en ce que** l'emplacement des boîtiers pour la fixation de la partie de support principale (2) coïncide avec l'emplacement des points de fixation de la poignée (4) sur la portière, de sorte que les deux pièces puissent être fixées à la structure résistante de la portière en même temps.

18. Organe de support multifonction pour portières de véhicule selon la revendication 1, **caractérisé en ce que** celui des éléments qui comporte la fonction audio se compose d'une zone perforée dans la partie de support principale (2) définissant une grille (2.1.1) pour le passage du son depuis un haut-parleur disposé à l'arrière de ladite partie de support principale (2).

19. Organe de support multifonction pour portières de véhicule selon la revendication 1, **caractérisé en ce que** la partie de support principale (2) possède au moins une balise (2.8) pour garantir son positionnement correct durant l'installation.

20. Organe de support multifonction pour portières de véhicule selon la revendication 1, **caractérisé en ce que** la partie de support principale (2) comporte un système d'assainissement de l'air (2.5.1).

21. Organe de support multifonction pour portières de véhicule selon la revendication 1, **caractérisé en ce que** dans la paroi inférieure (2.6) la partie de support principale (2) possède une perforation donnant accès à la poche (9) de la portière.

22. Organe de support multifonction pour portières de véhicule selon la revendication 1, **caractérisé en ce que** la partie de support principale (2) comporte un boîtier pour l'actionneur de fenêtre électrique.

23. Organe de support multifonction pour portières de véhicule selon la revendication 22, **caractérisé en ce que** l'actionneur de fenêtre électrique est logé par coulissage (4.4) dans la poignée (4) et coulissage (2.6.1) dans la paroi inférieure (2.6) de la partie de support principale (2), ledit coulissage (2.6.1) étant le moyen de passer dans le câblage.

24. Organe de support multifonction pour portières de véhicule selon la revendication 1, **caractérisé en ce que** la partie de support principale (2) comporte des boîtiers pour les actionneurs destinés à la commande des différents mécanismes électriques présents sur le véhicule.
